# EUROPEAN PATENT SPECIFICATION

(11) **EP 1 184 920 B1**
(45) Date of publication and mention of the grant of the patent: **05.12.2012**
(21) Application number: 01120637.2
(22) Date of filing: 30.08.2001
(51) Int. Cl.: H01M 4/58, H01M 4/62, H01M 4/04

(54) **Cathode active material, method for preparation thereof, non-aqueous electrolyte cell and method for preparation thereof**
Aktives Kathodenmaterial, Verfahren zu seiner Herstellung, nichtwässrige-Sekundärbatterie und Verfahren zu ihrer Herstellung
Matière active de cathode, sa méthode de préparation, batterie à électrolyte non aqueux et sa méthode de préparation

(30) Priority: 30.08.2000 JP 2000261277
(43) Date of publication of application: 06.03.2002
(73) Proprietor: Sony Corporation, Tokyo (JP)
(72) Inventor: Hosoya, Mamoru, Minato-ku Tokyo (JP); Takahashi, Kimio, Minato-ku Tokyo (JP); Fukushima, Yuzuru, Minato-ku Tokyo (JP)
(74) Representative: Müller - Hoffmann & Partner

(56) References cited:
- EP-A- 1 094 532
- WO-A-01/53198
- WO-A-97/40541
- PATENT ABSTRACTS OF JAPAN vol. 1997, no. 09, 30 September 1997 (1997-09-30) & JP 09 134725 A (NIPPON TELEGR &TELEPH CORP <NTT>), 20 May 1997 (1997-05-20)

## Description

### Field of the Invention

This invention relates to a cathode active material, capable of reversibly doping/undoping lithium, a method for the preparation of the cathode active material, a non-aqueous electrolyte cell employing this cathode active material, and a method for the preparation of the cell.

### Description of Related Art

In keeping up with the recent remarkable progress in the art of a variety of electronic equipment, researches in a re-chargeable secondary cell, as a power source usable conveniently economically for prolonged time, are underway. Representative of the secondary cells are a lead accumulator, an alkali accumulator and a non-aqueous electrolyte secondary cell.

Of these secondary cells, a lithium ion secondary cell, as a non-aqueous electrolyte secondary cell, has a number of merits, such as high output and high energy density. The lithium ion secondary cell is made up at least of a cathode and an anode, capable of reversibly doping/undoping lithium ions, and a non-aqueous electrolyte.

As an anode active material, metal lithium, lithium alloys, such as Li-Al alloys, electrically conductive high molecular materials, doped with lithium, such as polyacetylene or polypyrrole, and inter-layer compounds or carbon materials, having lithium ions taken into crystal structures thereof, are routinely used. As the electrolytic solution, a solution obtained on dissolving lithium salts in a non-protonic organic solvent is used.

As the cathode active material, metal oxides or sulfides or polymers, such as TiS₂, MoS₂, NbSe₂ and V₂O₅ are known. The discharging reaction of the non-aqueous electrolyte cell lithium ion secondary cell, employing these materials, proceeds in such a manner that lithium ions are elated into the electrolytic solution in an anode, with the lithium ions being intercalated into the inter-layer space of the cathode active material. That is, the reaction of lithium ions from the anode making an entrance into and exiting from the cathode active material is repeated by way of repeating the charging/discharging reaction.

Currently, as the cathode active material of the lithium ion secondary cell, LiCoO₂, LiNiO₂ and LiMn₂O₄, for example. However, these cathode active materials suffer from a problem that, since metal elements having a low Clarke number are included in the compositions thereof, the materials are expensive and difficult to supply in stability. Moreover, these cathode active materials are higher in toxicity and tend to affect the environment significantly. So, there is raised a demand for a novel cathode active material which is to take the place of the above compounds.

It has been proposed to use LiFePO₄, having an olivinic structure, as a cathode active material of the lithium ion secondary cell. This compound LiFePO₄ has a volumetric density of a larger value of 3.6 g/cm³, and generates a high potential of 3.4 V, with the theoretical capacity being as high as 170 mAh/g. On the other hand, LiFePO₄ contains one Li atom, capable of electro-chemical undoping in an initial state, per one Fe atom, and hence is a promising cathode active material. Since LiFePO₄ contains iron, as a material which is inexpensive and abundant as natural resource, in its composition, it is less costly than LiCoO₂, LiNiO₂ or LiMn₂O₄. Moreover, LiFePO₄ is low in toxicity and affects the environment only to a lesser extent.

However, LiFePO₄ is low in electronic conductivity, so that, if it is used as the cathode active material, it increases the internal resistance of the cell. Moreover, since the polarizing potential on circuit closure of the cell is increased due to the increased internal resistance of the cell, the cell capacity is decreased. On the other hand, since LiFePO₄ is low in true density as compared to the conventional cathode material, the active material charging rate is decreased if LiFePO₄ is used as the cathode active material. That is, the cell capacity is lowered, while the superior cyclic characteristics proper to LiFePO₄ cannot be exploited.

WO 01/53198 A and EP 1 094 532 A, which both are prior art with regard to Art. 54(3) EPC, teach a cathode active material composed of a compound having the general founds LiₓFePO₄, where 0 < x ≤ 1.0 and a carbon material, with a carbon content per unit weight being not less than 3 wt%.

### SUMMARY OF THE INVENTION

It is therefore an object of the present invention to provide a cathode active material having superior electronic conductivity and charging ratio, a manufacturing method therefor, a non-aqueous electrolyte cell employing the cathode active material and having superior cell capacity and cyclic characteristics, and a manufacturing method therefor.

In one aspect, the present invention provides a cathode active material composed of a compound having the general formula LiₓFePO₄ where 0 < x ≤ 1.0, and a carbon material, with the carbon content per unit weight being not less than 3 wt% and with the powder density being not lower than 2.2 g/cm³.

The cathode active material of the present invention is composed of a compound having the general formula LiₓFePO₄, where 0 < x ≤ 1.0, and a carbon material. Specifically, a large number of carbon particles are attached to the surface of LiₓFePO₄. So, the cathode active material exhibits superior electron conductivity. Moreover, since the carbon content per unit weight is prescribed to not less than 3 wt%, with the powder density being not lower than 2.2 g/cm³, the cathode active material exhibits a superior packing ratio.

In another aspect, the present invention provides non-aqueous electrolyte cell having a cathode including a cathode active material, an anode including an anode active material and a non-aqueous electrolyte, with the cathode active material being composed of a compound having the general formula LiₓFePO₄ where 0 < x ≤ 1.0, and a carbon material, with the carbon content per unit weight being not less than 3 wt% and with the powder density being not lower than 2.2 g/cm³.

The non-aqueous electrolyte cell according to the present invention, composed of LiₓFePO₄ where 0 < x ≤ 1.0, and a carbon material, with the carbon content per unit weight being not less than 3 wt% and with the powder density being not lower than 2.2 g/cm³, is superior in cell capacity and cyclic characteristics.

In still another aspect, the present invention provides a method for the preparation of a cathode active material composed of a compound having the general formula LiₓFePO₄ where 0 < x ≤ 1.0, and a carbon material, with the carbon content per unit weight being not less than 3 wt% and with the powder density being not lower than 2.2 g/cm³, in which the method includes mixing a plurality of starting materials for synthesis for a compound represented by the general formula LiₓFePO₄, milling and sintering the resulting mixture and adding a carbon material at any time point in the course of the mixing, milling and sintering.

With the method for the preparation of a cathode active material, according to the present invention, in which a carbon material is added, a cathode active material may be prepared which is superior in electron conductivity. Moreover, with the present method, in which milling is used, the powder density of the cathode active material not less than 2.2 g/cm³ may positively be achieved.

In yet another aspect, the present invention provides a method for the preparation of a non-aqueous electrolyte cell including a cathode containing a cathode active material composed of a compound having the general formula LiₓFePO₄ where 0 < x ≤ 1.0, and a carbon material, with the carbon content per unit weight being not less than 3 wt% and with the powder density being not lower than 2.2 g/cm³, an anode containing an anode active material, and a non-aqueous electrolyte, said method including mixing a plurality of starting materials for synthesis for a compound represented by the general formula LiₓFePO₄, milling and sintering the resulting mixture and adding a carbon material at any time point in the course of the mixing, milling and sintering.

With the present method for the preparation of a non-aqueous electrolyte cell, according to the present invention, in which a carbon material is added in the preparation of the cathode active material, a non-aqueous electrolyte cell may be prepared which is superior in electron conductivity. Moreover, with the present method for the preparation of a non-aqueous electrolyte cell, in which milling is used in producing the cathode active material, the powder density of the cathode active material may be positively 2.2 g/cm³ or higher, thus realizing a non-aqueous electrolyte cell having superior capacity density and cyclic characteristics

### BRIEF DESCRIPTION OF THE DRAWINGS

Fig.1 is a longitudinal cross-sectional view showing an illustrative structure of a non-aqueous electrolyte cell embodying the present invention.
Fig.2 is a graph showing Raman spectral peaks of a carbon material.

### DESCRIPTION OF THE PREFERRED EMBODIMENTS

Referring to the drawings, preferred embodiments of the present invention will be explained in detail.

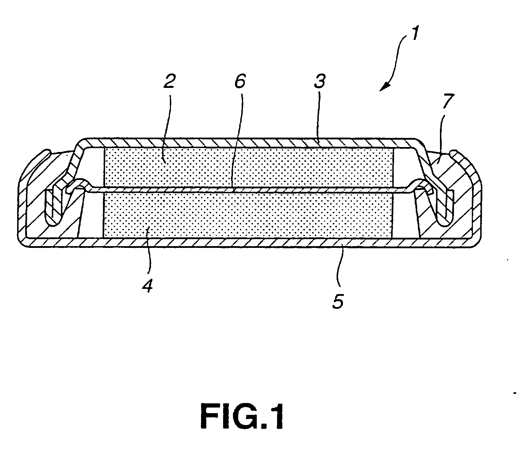

Fig.1 shows an illustrative structure of a non-aqueous electrolyte cell manufactured in accordance with the present invention. This non-aqueous electrolyte cell 1 includes an anode 2, an anodic can 3 accommodating the anode 2, an cathode 4, a cathodic can 5 accommodating the cathode 4, a separator 6 arranged between the cathode 4 ands the anode 2 and an insulating gasket 7. A non-aqueous electrolytic solution is charged into the anodic can 3 and into the cathodic can 5.

The anode 2 is formed by e.g., a foil of metal lithium operating as an anode active material. If a material capable of doping/undoping lithium is used as an anode active material, a layer of an anode active material of the anode 2 is formed on an anode current collector, which may, for example, be a nickel foil.

The anode active material, capable of doping/undoping lithium, may be laminar compounds of metal lithium, lithium alloys, electrically conductive high molecular materials, doped with lithium, carbon materials or metal oxides.

As a binder contained in the layer of an anode active material, any suitable known resin materials, routinely used as the binder of the layer of the anode active material, may be used.

The anodic can 3 holds the anode 2, while operating as an external anode for the non-aqueous electrolyte cell 1.

As the cathode 4, a layer of an cathode active material, containing a cathode active material, is formed on the cathode current collector. With this non-aqueous electrolyte cell 1, a cathode active material used is a composite material made up of LiFePO₄ of an olivinic structure and which is manufactured by a method as now explained, where 0 < x ≤ 1.0, and a carbon material, referred to below as a LiFePO₄ carbon composite material. As the cathode current collector, an aluminum foil, for example, is used.

It should be noted that LiFePO₄ of the olivinic structure, contained as the cathode active material, includes Fe as center metal atom, so that it may be less expensive. Moreover, lithium in LiFePO₄ of can be electro-chemically released or absorbed in a reversibly fashion.

The LiFePO₄ composite carbon material, employed in this non-aqueous electrolyte cell 1 as the cathode active material, is composed of LiFePO₄, where 0 < x ≤ 1.0, and a carbon material, with the carbon content per unit weight being not less than 3 wt% and the powder density being not less than 2.2 g/cm³.

This cathode active material is a LiFePO₄ carbon composite material, made up of LiFePO₄, where 0 < x ≤ 1.0, and a carbon material. Specifically, the cathode active material, that is the LiFePO₄ composite carbon material, is comprised of an LiFePO₄ particle on the surface of which are affixed a large number of carbon particles having a particle size extremely small as compared to the particle size of the an LiFePO₄ particle.

That is, this cathode active material contains a large number of carbon particles affixed to the surface of the LiFePO₄ particle. This increases the specific surface area of the cathode active material to improve the electronic conductivity of the cathode active material. It should be noted that the carbon content per unit weight of the cathode active material is to be not less than 3 wt%. If the carbon content per unit weight of the cathode active material is less than 3 wt%, the amount of the carbon particles affixed to the surface of the LiFePO₄ particle is not that large and hence it is not possible to realize a sufficient effect in improving the electronic conductivity. If the carbon content per unit weight of the cathode active material is not less than 3 wt%, the capacity inherent in LiFePO₄ can be exploited sufficiently.

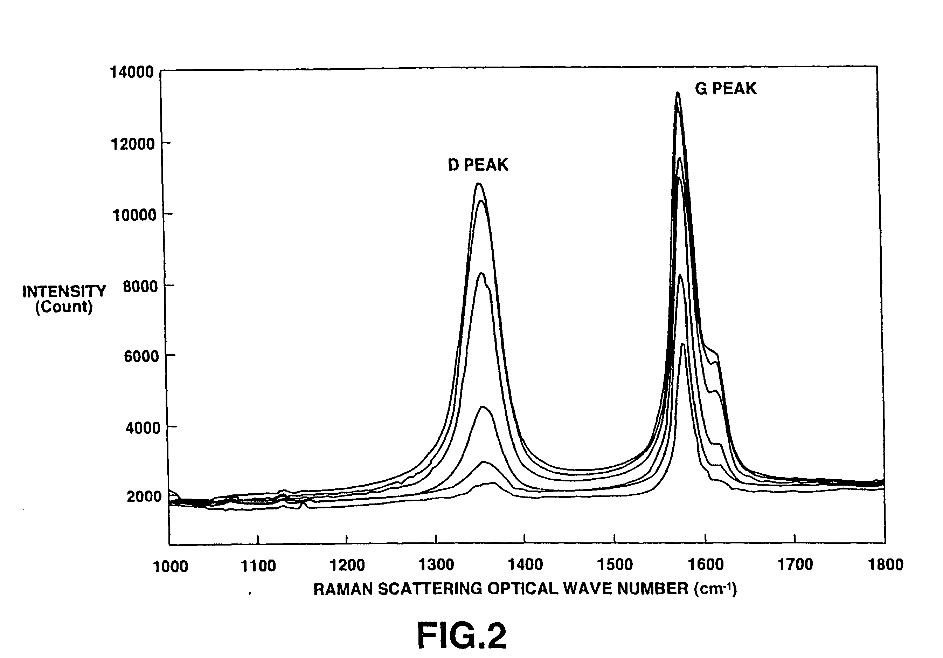

As a carbon material to be contained in the above-described cathode active material, such a carbon material which has an intensity area ratio of the diffracted light appearing at the number of waves of 1570 to 1590 cm⁻¹ to the diffracted light appearing at the number of waves of 1350 to 1360 cm⁻¹ in the Raman spectrometry A(D/G) of not less than 0.3. The intensity area ratio A (D/G) is here defined as being the background-free Raman spectral intensity areal ratio of a G peak appearing at the number of waves of 1570 to 1590 cm⁻¹ and a D peak appearing at the number of waves of 1350 to 1360 cm⁻¹ as measured by the Raman spectral method shown in Fig.2. The "background-free" means not containing a noise portion.

As described above, two of the numerous peaks of the Raman spectrum of Gr, namely the G peak appearing at the number of waves of 1570 to 1590 cm⁻¹ and the D peak appearing at the number of waves of 1350 to 1360 cm⁻¹, are observed. Of these, the D peak is not a peak inherent in the Gr peak, but is a Raman inactive peak appearing when the structure is distorted and the structural symmetry is lowered. Therefore, the D peak is a measure of the distorted structure of Gr. It is known that the intensity area ratio A (D/G) between the D and Gr peaks has a linear relation to a reciprocal of the crystal size La as measured along the a-axis of Gr.

For example, graphite, as a crystalline carbon material, is destroyed in its structure by pulverization using a powerful crusher such as a planet type ball mill to undergo amorphization, as a result of which the intensity area ratio A (D/G) is increased. That is, a carbon material having any optional A(D/G) value can readily be obtained by controlling the operating time of the crusher.

This cathode active material has an extremely small particle size of LiFePO₄. If the particle size of the cathode active material is larger, the specific surface area of the cathode active material is decreased. If the specific surface area of the cathode active material is small, the reciprocal contact area in the cathode active material is decreased, as a result of which the electronic conductivity is lowered to decrease the discharge capacity.

Conversely, with the present cathode active material, in which the powder density is set to not less than 2.2 g/cm³, the particle size of LiFePO₄ is set to a sufficiently small value to give the powder density not less than 2.2 g/cm³. With the present cathode active material, since the particle size of LiFePO₄ is set to a small value to give the powder density not less than 2.2 g/cm³, the specific surface area of the cathode active material is larger and hence the reciprocal contact area in the cathode active material is larger, thus improving the electronic conductivity of the cathode active material.

By the above two meritorious effects, the present cathode active material is superior in electronic conductivity, thus achieving a cathode active material exhibiting superior electronic conductivity.

On the other hand, with the present cathode active material, in which the particle size of LiFePO₄ is small, the powder density becomes higher, so that the packing ratio of the cathode active material at the time of forming a cell is higher, thus providing a cell having both the superior cyclic characteristics inherent in LiFePO₄ and a larger cell capacity.

The binder contained in the layer of the cathode active material may be any suitable known resin material routinely used as the binder for this sort of the layer of the cathode active material of the non-aqueous electrolyte cell.

The cathodic can 5 holds the cathode 4 and serves as an external cathode of the non-aqueous electrolyte cell 1.

The separator 6, separating the cathode 4 from the anode 2, may be formed of any suitable known material commonly used as a separator for this sort of the non-aqueous electrolyte cell. For example, a high molecular film of, for example, polypropylene, may be used. From the relation between the lithium ion conductivity and the energy density, the separator is preferably of as small a thickness as possible. Specifically, the separator thickness of, for example, 50 µm or less is desirable.

The insulating gasket 7 is built-in and unified to the anodic can 3 and is used for preventing leakage of the non-aqueous electrolyte charged into the anodic can 3 and into the cathodic can 5.

As the non-aqueous electrolytic solution, such a solution obtained on dissolving an electrolyte in a non-protonic non-aqueous solvent may be used.

The non-aqueous solvent may be exemplified by, for example, propylene carbonate, ethylene carbonate, butylene carbonate, vinylene carbonate, γ-butyrolactone, sulforane, 1, 2- dimethoxyethane, 1, 2- diethoxyethane, 2-methyltetrahydrofuran, 3-methyl-1,3-dioxolane, methyl propionate, methyl lactate, dimethyl carbonate, diethyl carbonate and dipropyl carbonate. In particular, cyclic carbonates, such as propylene carbonate, ethylene carbonate, a butylen carbonate or vinylene carbonate, or chained carbonates, such as dimethyl carbonate, diethyl carbonate and dipropyl carbonate, are desirably used in view of voltage stability. The non-aqueous solvent may be used alone or in combination.

As the electrolytes, dissolved in a non-aqueous solvent, lithium salts, such as LiPF₆, LiClO₄, LiAsF₆, LiBF₄, LiCF₃SO₃ or LiN(CF₃SO₂)₂, may be used. Of these, LiPF₆ and LiBF₄ are desirable.

The non-aqueous electrolyte cell 1 of the present invention, as described above, includes a LiFePO₄ composite carbon material composed of the above-mentioned cathode active material, that is LiFePO₄ where 0 < x ≤ 1.0, having the olivinic structure, and a carbon material, with the carbon content per unit area being not less than 3 wt% and with the powder density not less than 2.2 g/cm².

Thus, the present non-aqueous electrolyte cell 1 is superior in the packing ratio of the cathode active material and in electronic conductivity. Therefore, with the present non-aqueous electrolyte cell 1, lithium ion doping and undoping occur smoothly to realize a high cell capacity. Moreover, the cyclic characteristics inherent in LiFePO₄ can be exploited sufficiently to realize a non-aqueous electrolyte cell having superior capacity and cyclic characteristics.

There is no particular limitation to the shape or size of the non-aqueous electrolyte cell 1 which may be cylindrically-shaped, square-shaped, coin-shaped or button-shaped, or may be of a thin or large type, as desired. Moreover, the present invention may be applied to both a primary cell and to a secondary cell.

In the above-described embodiment, the non-aqueous electrolyte cell 1 employing a non-aqueous electrolyte solution is used by way of an example. However, the present invention may also be applied to a non-aqueous electrolyte cell employing a solid electrolyte as the non-aqueous electrolyte. As the solid electrolyte, a high molecular solid electrolyte, such as gel electrolyte, or an inorganic solid electrolyte, may be used, provided that the material used exhibits lithium ion conductivity. The inorganic solid electrolyte may be enumerated by lithium nitride and lithium iodide. The high molecular solid electrolyte is comprised of the electrolyte salt and the high molecular compound for dissolving the electrolyte salt. The high molecular compound may be an etheric high molecular material, such as poly(ethylene oxide), cross-linked or not, poly(methacrylate) ester based high molecular compounds or acrylate-based high molecular compounds, which may be used alone, as a co-polymer, or as a mixture. In this case, a variety of high molecular materials may be used as the matrix for the gel electrolyte, if the matrix absorbs the non-aqueous solvent. These high molecular materials used may be fluorine-based high molecular materials, such as poly(vinylidene fluoride) or poly(vinylidene fluoride -CO- hexafluoropropylene), etheric high molecular compounds, such as poly(ethylene oxide), cross-linked or not, or poly(acrylonitrile). Of these, fluorine-based high molecular materials are preferred in view of redox stability.

The manufacturing method for the non-aqueous electrolyte cell 1, described above, is now explained.

First, a LiFePO₄ carbon composite material, as a composite material of LiFePO₄ having an olivinic structure and carbon, used as cathode active material, is synthesized.

If, in the present embodiment, LiFePO₄ is synthesized, starting materials for LiFePO₄ are mixed in pre-set proportions to produce a sample mixture.

As typical starting materials for synthesizing LiFePO₄, lithium carbonate (LiCO₃), diamonium phosphate (NH₄H₂PO₄) or iron acetate (II)(Fe(CH₃COO)) may be used.

In addition, lithium phosphate (Li₃PO₄), iron phosphate (II)(Fe₃(PO₄)₂) or hydrides thereof (Fe₃(PO₄)₂·nH₂O), where n is the number of water molecules, may also be used as effective starting materials.

The sample mixture of the starting materials for LiFePO₄, prepared as described above, may also be used as effective starting materials for synthesis.

As the carbon materials, those having the intensity area ratio A (D/G) of the diffraction rays appearing in the number of waves of 1570 to 1590 cm⁻¹ to the diffraction rays appearing in the number of waves of 1350 to 1360 cm⁻¹ in the Raman spectrum of Gr in the Raman spectrometry equal to or higher than 0.3 may preferably be used. It should be noted that the intensity area ratio A (D/G) is defined as being the background-free Raman spectral intensity areal ratio of the G peak appearing at the number of waves of 1570 to 1590 cm⁻¹ and the D peak appearing at the number of waves of 1350 to 1360 cm⁻¹ as measured in the Raman spectrometry.

These materials, such as amorphous carbon materials, e.g., acetylene black, may preferentially be used. In addition, crystalline carbonaceous materials may also be used.

The carbon material, having the intensity area ratio A (D/G) of not less than 0.3, may be obtained e.g., by processing such as crushing with a pulverizer. By controlling the crushing time duration, carbon materials having any optional value of A (D/G) may be obtained.

For example, graphite, as crystalline carbonaceous material, is destroyed in its structure by crushing with a powerful crusher, such as a planetary ball mill, and is thereby amorphized, such that the intensity area ratio A (D/G) is correspondingly increased. By controlling the operating time of the crusher, a carbon material with an optional ratio of A (D/G) of 0.3 or higher may be obtained.

The carbon material is added so that the carbon content per unit weight in the cathode active material is not less than 3 wt%. By setting the carbon content per unit weight of the cathode active material, the capacity and cyclic characteristics proper to LiFePO₄ can be displayed satisfactorily.

The pre-sintering sample mixture, admixed with the carbon material, is then processed with milling which is simultaneous crushing and mixing. In the present invention, milling means powerful crushing and mixing with a ball mill. For ball mills, a planetary ball mill shaker type ball mill or a mechano-fusion may suitably be employed.

The pre-sintering sample mixture may be comminuted in particle size by milling, while the starting materials and the carbon materials may also be mixed uniformly by milling. Since this increases the number of contact points of the pre-sintering sample mixture, the synthesis reaction in the subsequent sintering process can be executed promptly.

By milling, the pre-sintering sample mixture may be comminuted to extremely small size, so that the powder density of the post-sintering cathode active material can be 2.2 g/cm³ or higher. With the post-sintering powder density of the cathode active material of 2.2 g/cm³ or higher, the specific surface area of the cathode active material can be higher and hence the reciprocal contact area in the cathode active material can be larger to improve the electronic conductivity of the cathode active material. Thus, by milling the pre-sintering sample mixture, it is possible to prepare a cathode active material having a superior cell capacity.

Moreover, by setting the powder density to 2.2 g/cm³ or higher, the cathode active material may be higher in powder density. This raises the packing ratio of the cathode active material and the charging ratio of the cathode active material in constructing the cell. In addition, the superior cyclic characteristics proper to LiFePO₄ can be displayed sufficiently so that a non-aqueous electrolyte cell can be prepared which has a high capacity and superior cyclic characteristics.

The pre-sintering sample mixture, thus milled, is sintered in an inert gas atmosphere, such as nitrogen or argon, or in a reducing gas atmosphere, such as hydrogen or carbon monoxide, to synthesize a LiFePO₄ composite carbon material. If lithium carbonate (LiCO₃), diammonium phosphate (NH₄H₂PO₄) and iron acetate (II)(Fe(CH₃COO)) are used as the starting materials for synthesis of LiFePO₄, the synthesis reaction of LiFePO₄ in the sintering process is represented by the following chemical formula (1):

Li₂CO₃ + 2Fe(CH₃COO)₂ + 2(NH₄H₂PO₄), 2LiFePO₄ + CO₂ +H₂O + 2NH₃ + 4CH₃COOH (1).

If lithium phosphate Li₃PO₄ and iron phosphate (II) (Fe₃(PO₄)₂) or hydrides (Fe₃(PO₄)₂·nH₂O), where n denotes the number of water molecules, are used as the starting materials for synthesis of LiFePO₄, the synthesis reaction of LiFePO₄ in the sintering process is represented by the following chemical formula (2):

Li₃PO₄ + Fe₃(PO₄)_{2·}H₂O (where n denotes the number of water molecules and n = 0 in case of an anhydride) → 3 LiFePO₄ + nH₂O (2).

It should be noted that the sintering temperature in the above-mentioned sintering is preferably 400°C to 900°C. By carrying out the sintering in the above-mentioned temperature range, the discharging capacity may be improved as compared to the case of LiFePO₄ obtained by the conventional manufacturing method. With the sintering temperature less than 400°C, chemical reaction or crystallization cannot proceed sufficiently, such that uniform LiFePO₄ may not be obtained due to the presence of the Fe³⁺ containing phase such as trivalent iron compounds as impurities. If conversely the sintering temperature exceeds 900° C, crystallization tends to proceed excessively, with the result that LiFePO₄ particles are coarser or the precipitation of impurities cannot be suppressed such that sufficient discharging capacity cannot be realized.

Although the carbon material is added in the foregoing before milling the sample mixture, the carbon material may also be added after sintering. In this case, the product synthesized on sintering is not the LiFePO₄ composite carbon material but is LiFePO₄. The carbon material is added to LiFePO₄ to prepare the LiFePO₄ composite carbon material. In this case, LiFePO₄ is added to with the carbon material and again milled whereby the carbon material added may be comminuted in particle size so that the carbon material may be attached more readily on the LiFePO₄ surface. Moreover, LiFePO₄ may be mixed sufficiently with the carbon material to permit the comminuted carbon material to be attached evenly to the LiFePO₄ surface. The result is that, if the carbon material is added prior to milling, it is possible to obtain a product similar to the product obtained on adding the carbon material prior to milling, that is the LiFePO₄ composite carbon material, to achieve similar result.

The non-aqueous electrolyte cell 1 employing the so-produced LiFePO₄ composite carbon material may, for example, be produced by the following method:

As for the anode 2, an anode active material and a binder are dispersed in a solvent to prepare a slurried anode mixture, which then was evenly coated on a current collector and dried to prepare a layer of the anode active material to complete the anode 2. As the binder of the anode mixture, any suitable known binder may be used. In addition, any suitable known binder may be added to the anode mixture. Moreover, metal lithium which later proves an anode active material may directly be used as the anode 2.

As for the cathode 4, the LiFePO₄ composite carbon material, which proves the cathode active material, and the binder, are dispersed in a solvent to prepare a slurried cathode mixture, which then was evenly coated on a current collector and dried to prepare a layer of the cathode active material to complete the anode 2. As the binder of the cathode mixture, any suitable known binder may be used. In addition, any suitable known binder may be added to the cathode mixture.

The non-aqueous electrolyte solution is prepared by dissolving the electrolyte salt in a non-aqueous solvent.

The anode 2 is housed in the anodic can 3, while the cathode 4 is housed in the cathodic can 5 and a separator 6 formed of a porous film of polypropylene is arranged between the anode 2 and the cathode 4. A non-aqueous electrolytic solution is charged into the anodic can 3 and the cathodic can 5, and the two cans 3, 5 are caulked together with the interposition of the insulating gasket 7 in-between and thereby secured together to complete the non-aqueous electrolyte cell 1.

### EXAMPLES

The present invention is hereinafter explained with reference to several Examples. For checking for the effect of the present invention, the LiFePO₄ composite carbon material is synthesized and, using the so-produced LiFePO₄ composite carbon material as the cathode active material, a cell was prepared to evaluate its characteristics.

### Example 1

First, the LiFePO₄ composite carbon material was prepared.

For synthesizing the LiFePO₄ composite carbon material, lithium phosphate Li₃PO₄ and iron phosphate (II) octohydrate (Fe₃(PO₄)₂·8H₂O) are mixed to give an lithium to iron element ratio of 1:1. To the resulting system, acetylene black powders, as the amorphous carbon material, were added in an amount of 3 wt% of the entire fired product to prepare a sample mixture. This sample mixture was then charged into an alumina vessel and milled using a planetary ball mill. For the planetary ball mill, a planetary rotating pot mill for test "LA-PO₄" manufactured by ITO SEISAKUSHO KK was used.

In carrying out the milling on the planetary ball mill, the sample mixture and alumina balls 10 mm in diameter were charged into an alumina pot 100 mm in diameter, with the sample mixture to alumina ball weight ratio of 1:2, The milling was carried out under the following conditions:
Conditions for the planetary ball mill:
   radius of rotation about the sum gear: 200 mm
   number of revolutions about the sum gear: 250 rpm
   number of revolutions about itself: 250 rpm
   driving time: 10 hrs.

The sample mixture, thus milled, was charged into a ceramic crucible, and fired for five hours at a temperature of 600°C in an electric oven in a nitrogen atmosphere to produce the LiFePO₄ composite carbon material.

Using the LiFePO₄ composite carbon material, as a cathode active material, obtained as described above, a cell was prepared.

95 parts by weight of the dried LiFePO₄ composite carbon material as the cathode active material and 5 parts by weight of poly(vinylidene fluoride) (fluorine resin powders) as a binder were mixed together and molded under pressure application to produce a pellet-shaped cathode 15.5 mm in diameter and 0.1 mm in thickness.

A lithium metal foil was punched to substantially the same shape as the cathode to prepare an anode.

In a solvent mixture of equal volumes of propylene carbonate and dimethyl carbonate was dissolved LiPF₆ in a concentration of 1 mol/l to prepare a non-aqueous electrolytic solution.

The cathode, so produced, was housed in the cathodic can, while the anode was housed in the anodic can and a separator was arranged between the cathode and the anode. The non-aqueous electrolytic solution was charged into the cathodic can and into the anodic can which were then caulked and secured together to prepare a 2016 type coin-shaped test cell 20.0 mm in diameter and 1.6 mm in thickness.

### Example 2

A coin-shaped test cell was prepared in the same way as in Example 1 except setting the amount of addition of the acetylene black powders to 5 wt% of the entire fired product.

### Example 3

A coin-shaped test cell was prepared in the same way as in Example 1 except setting the amount of addition of the acetylene black powders to 7.5 wt% of the entire fired product.

### Example 4

A coin-shaped test cell was prepared in the same way as in Example 1 except setting the amount of addition of the acetylene black powders to 10 wt% of the entire fired product.

### Example 5

A coin-shaped test cell was prepared in the same way as in Example 1 except setting the amount of addition of the acetylene black powders to 20 wt% of the entire fired product.

### Example 6

A coin-shaped test cell was prepared in the same way as in Example 1 except preparing the LiFePO₄ composite carbon material as follows:

For synthesizing the LiFePO₄ composite carbon material, lithium phosphate Li₃PO₄ and iron phosphate (II) octohydrate (Fe₃(PO₄)₂·8H₂O) are mixed to give an lithium to iron element ratio of 1:1. The resulting product was charged into a ceramic crucible and fired for five hours at a temperature of 600°C in an electric oven maintained in a nitrogen- hydrogen atmosphere to produce a lithium iron phosphate oxide.

To this lithium iron phosphate oxide were added acetylene black powders as amorphous carbon material in an amount corresponding to 3 wt% based on the total weight to prepare a sample mixture.

This sample mixture then was charged into an alumina vessel and milled, using a planetary ball mill, to produce an LiFePO₄ composite carbon material. As the planetary ball mill, a planetary rotating pot mill for test "LA-PO₄" manufactured by ITO SEISAKUSHO KK was used.

In carrying out the milling on the planetary ball mill, the sample mixture and alumina balls 10 mm in diameter were charged into an alumina pot 100 mm in diameter with the sample mixture to alumina ball weight ratio of 1:2. The milling was carried out under the following conditions:
conditions for the planetary ball mill:
   radius of rotation about the sum gear: 200 mm
   number of revolutions about the sum gear: 250 rpm
   number of revolutions about itself: 250 rpm
   driving time: 10 hrs.

### Example 7

A coin-shaped test cell was prepared in the same way as in Example 9 except setting the amount of addition of the acetylene black powders to 5 wt% of the entire fired product.

### Example 8

A coin-shaped test cell was prepared in the same way as in Example 9 except setting the amount of addition of the acetylene black powders to 7.5 wt% of the entire fired product in the preparation of the sample mixture.

### Example 9

A coin-shaped test cell was prepared in the same way as in Example 9 except setting the amount of addition of the acetylene black powders to 10 wt% of the entire fired product in the preparation of the sample mixture.

### Example 8

A coin-shaped test cell was prepared in the same way as in Example 9 except setting the amount of addition of the acetylene black powders to 20 wt% of the entire fired product in the preparation of the sample mixture.

### Comparative Example 1

A coin-shaped test cell was prepared in the same way as in Example 3 except not carrying out the milling with the planetary ball mill.

### Comparative Example 2

A coin-shaped test cell was prepared in the same way as in Example 4 except adding graphite serving as the crystalline carbon material to be 10wt% by weight, in place of acetylene black powders in the preparation of the sample mixture.

### Comparative Example 3

A coin-shaped test cell was prepared in the same way as in Example 1 except not adding acetylene black powders in the preparation of the sample mixture.

### Comparative Example 4

A coin-shaped test cell was prepared in the same way as in Example 1 except setting the amount of addition of the acetylene black powders to 1 wt% of the entire fired product.

### Comparative Example 5

A coin-shaped test cell was prepared in the same way as in Example 1 except setting the amount of addition of the acetylene black powders to 2 wt% of the entire fired product in the preparation of the sample mixture.

### Comparative Example 6

A coin-shaped test cell was prepared in the same way as in Example 1 except setting the amount of addition of the acetylene black powders to 30 wt% of the entire fired product.

### Comparative Example 7

A coin-shaped test cell was prepared in the same way as in Example 6 except setting the amount of addition of the acetylene black powders to 1 wt% of the entire fired product in the preparation of the sample mixture.

### Comparative Example 8

A coin-shaped test cell was prepared in the same way as in Example 6 except setting the amount of addition of the acetylene black powders to 2 wt% of the entire fired product.

### Comparative Example 9

A coin-shaped test cell was prepared in the same way as in Example 6 except setting the amount of addition of the acetylene black powders to 30 wt% of the entire fired product in the preparation of the sample mixture.

A charging/discharging test was conducted on the coin-shaped test cell, prepared as described above, by way of evaluating the initial discharging capacity density and the initial volumetric capacity density. In addition, measurement was made of the powder density of the powders of the LiFePO₄ composite carbon material, used as the cathode active material of each test cell.

### Charging/discharging test

Each test cell was charged with a constant current. When the cell voltage reached 4.2 V, constant current charging was changed over to constant voltage charging and charging was continued as the voltage was kept at 4.2 V. Each test cell was then discharged. The charging was terminated when the current fell to 0.01 mA/cm² or less. Each cell then was discharged and the discharging was terminated when the cell voltage was lowered to 2.0 V. Both charging and discharging were carried at an ambient temperature (25°C), with the current density at this time being 0.1 mA/cm².

The initial discharging capacity density indicates the initial discharging capacity per unit weight of the LiFePO₄ composite carbon material. The initial volumetric capacity density denotes the product of the powder density and the initial discharging capacity density.

### Measurement of Powder Density

500 mg of the powders of the LiFePO₄ composite carbon material, used as the cathode active material of each test cell, were weighed out and molded to a pellet by repeating pressuring at 2t/cm² twice using a stainless steel die 15.5 mm in diameter. The thickness of the pellet was measured and the powder density was calculated from the weight (500 mg), thickness and the diameter (15.5 mm) of the pellet.

Table 1 shows the powder density, initial discharging capacity density, initial volumetric capacity density, cell evaluation and carbon content, as found in the manner described above. As for the cell evaluation, the cell having the initial volumetric capacity not lower than 350 mAh/cm³ was marked ○, while that with the initial volumetric capacity lower than 350 mAh/cm³ was marked x. It should be noted that 350 mAh/cm³ represents the measure of the initial volumetric capacity density desirable as cell characteristics.

**Table 1**

| | carbon content (%) | powder density (g/cm³) | initial capacity density (mAh/cm³) | initial volumetric capacity density | cell evaluation |
|---|---|---|---|---|---|
| Ex.1 | 3 | 2.41 | 147 | 354 | ○ |
| Ex.2 | 5 | 2.38 | 155 | 369 | ○ |
| Ex.3 | 7.5 | 2.35 | 160 | 376 | ○ |
| Ex.4 | 10 | 2.31 | 161 | 372 | ○ |
| Ex.5 | 20 | 2.23 | 161 | 359 | ○ |
| Ex.6 | 3 | 2.41 | 146 | 352 | ○ |
| Ex.7 | 5 | 2.38 | 154 | 367 | ○ |
| Ex.8 | 7.5 | 2.36 | 159 | 375 | ○ |
| Ex.9 | 10 | 2.3 | 160 | 368 | ○ |
| Ex.10 | 20 | 2.22 | 160 | 355 | ○ |
| Comp. Ex. 1 | 10 | 2.15 | 125 | 269 | × |
| Comp. Ex. 2 | 10.0 (graphite) | 2.34 | 132 | 309 | × |
| Comp. Ex. 3 | 0 | 2.46 | 0 | 0 | × |
| Comp. Ex. 4 | 1 | 2.45 | 8 | 20 | × |
| Comp. Ex. 5 | 2 | 2.43 | 88 | 214 | × |
| Comp. Ex. 6 | 30 | 2.11 | 160 | 338 | × |
| Comp. Ex. 7 | 1 | 2.46 | 12 | 30 | × |
| Comp. Ex. 8 | 2 | 2.44 | 95 | 232 | × |
| Comp. Ex. 9 | 30 | 2.12 | 159 | 337 | × |

Of the Examples 1 to 5 and 6 to 10, those with the same carbon content values, that is Examples 1-6, Examples 2-7, Examples 3-8, Examples 4-9 and Example 5-10, were compared with respect to the powder density, initial discharging capacity density and initial volumetric capacity density. The results indicated substantially equal values, that is that there is observed no difference.

It has now been seen that the difference in the powder density, initial discharging capacity density or in the initial volumetric capacity density is not produced by the difference in the process between the Examples 1 to 5 and 6 to 10, that is by the difference as to whether the step of addition of the acetylene black as the amorphous carbon material and the milling step in the preparation of the LiFePO₄ composite carbon material are carried out before or after the sintering process.

Since acetylene black is lower in true density than LiFePO₄, the amount of addition of acetylene black is inversely proportionate to the powder density, as indicated in Table 1.

On the other hand, the initial discharging capacity density increased until the amount of addition of acetylene black reached 7.5 wt%, and thereafter remained substantially constant at 160 mAh/g despite the increased amount of addition of acetylene black. This is presumably due to the fact that a sufficient electrical conductivity to realize the capacity inherent in LiFePO₄ has been achieved with the amount of addition of acetylene black of not less than 7.5 wt%. For this reason, the powder density is gradually decreased even with the same discharge capacity, so that, with the amount of addition of acetylene black being not less than 7.5 wt%, the volumetric density is decreased gradually.

In the Comparative Example 1, in which the milling process is omitted, the powder density is lower, probably due to the fact that crushing and compression of the powders is insufficient because of the lack of the milling process, with the powder being of a coarse particle size. In the Comparative Example 1, both the initial discharging capacity density and initial volumetric capacity density are of lower values. This is presumably ascribable to the fact that, since the powder density is low, that is the particle size of the powders is coarse, the contact between LiFePO₄ and acetylene black as electrically conductive material is insufficient, as a result of which sufficient electronic conductivity of the LiFePO₄ composite carbon material has not been achieved.

In the Comparative Example 2 in which graphite as the crystalline carbon material is used, both the initial discharging capacity density and the initial volumetric capacity density are insufficient, possibly due to the electronic conductivity per unit weight of graphite as the crystalline carbon material being inferior to that of acetylene black as the amorphous carbon material and to the increased polarization ascribable to the specific surface area of the graphite being lower than that of the acetylene black.

In the Comparative Example 3 in which no acetylene black was added, no charging/discharging of the cell took place, indicating that no cell action could be achieved.

In the Comparative Examples 4 and 5, in which the amounts of addition of acetylene black were 1 and 2 wt%, respectively, the powder density exhibited satisfactory values, however, the initial discharging capacity density was of a lower value. This is presumably ascribable to the fact that, due to the smaller amount of addition of the acetylene black as the electrically conductive material, it has not been possible to develop sufficient electrical conductivity to produce the capacity inherent in LiFePO₄. Moreover, since the initial discharging capacity is low, the initial volumetric capacity density is of a lower value, so that the evaluation of the cell in its entirety is not optimum.

In the Comparative Example 6 in which the amount of addition of the acetylene black is 30 wt%, the powder density is of an optimum value, however, the initial discharging capacity density is insufficient, and hence the evaluation of the cell in its entirety is not optimum.

In the Comparative Examples 7 and 8, in which the amounts of addition of acetylene black were 1 and 2 wt%, respectively, the powder density exhibited satisfactory values, however, the initial discharging capacity density was of a lower value. This is presumably ascribable to the fact that, due to the smaller amount of addition of the acetylene black as the electrically conductive material, it has not been possible to develop sufficient electrical conductivity to produce the capacity inherent in LiFePO₄. Moreover, since the initial discharging capacity is low, the initial volumetric capacity density is of a lower value, so that the evaluation of the cell in its entirety is not optimum.

In the Comparative Example 9 in which the amount of addition of the acetylene black is 30 wt%, the powder density is of an optimum value, however, the initial discharging capacity density is insufficient, and hence the evaluation of the cell in its entirety is not optimum.

From the foregoing, it may be said that a high-capacity non-aqueous electrolyte cell can be produced by setting the carbon content of the composite carbon material and the powder density to 3 wt% or higher and to 2.2 g/cm³, respectively.

### Example 11

A coin-shaped test cell was prepared in the same way as in Example 1 except using a graphite-based anode as an anode.

Meanwhile, in preparing the graphite-based anode, 90 parts by weight of graphite, as the anode active material, and 10 parts by weight of poly (vinylidene fluoride), which is fluorine resin powders, as a binder, were mixed together and evenly mixed into N-methyl pyrrolidone as a solvent to form a slurry. This slurry then was coated on a copper foil, 15 µm thickness, dried under heating, pressed and punched to substantially the same shape as the cathode to prepare the graphite-based anode.

Of the coin-shaped test cells of the Examples 4 and 11, thus produced, the charging/discharging cyclic characteristics were evaluated.

### Test on charging/discharging cyclic characteristics

The charging/discharging cyclic characteristics were evaluated by the volumetric upkeep ratio following repeated charging/discharging operations.

Each test cell was charged with a constant current. When the cell voltage reached 4.2 V, constant current charging was changed over to constant voltage charging, and charging was continued as the voltage was kept at 4.2 V. Each test cell was then discharged. The charging was terminated when the current fell to 0.01 mA/cm² or less. Each cell then was discharged and the discharging was terminated when the cell voltage was lowered to 2.0 V.

With the above process as one cycle, 50 cycles of the above process were carried out and the discharging capacities at the first and fiftieth cycles were found. The ratio of the discharging capacity at the 100th cycle (C2) to the discharging capacity at the first cycle (C1), or ((C2/C2)×100), was found as the discharge capacity upkeep ratio (%). Meanwhile, both charging and discharging operations were conducted at ambient temperature (25 ° C) with the current density of 0.1 mA/cm². The results are shown in Table 2:

**Table 2**

| | volumetric upkeep ratio (%) after 50 cycles |
|---|---|
| Ex.4 | 98.5 |
| Ex.11 | 99.1 |

It is seen from Table 2 that Example 11 employing graphite-based carbon as the anode active material has charging/discharging cyclic characteristics equivalent to or higher than those of the Example 4 employing metal lithium as the anode. From this it may be said that the coin-shaped test cell employing the LiFePO₄ composite carbon material as the cathode active material exhibits superior charging/discharging characteristics without dependency on the type of the anode material.

Next, in preparing the LiFePO₄ composite carbon material, evaluation was made of a case in which carbonaceous materials with different values of the Raman spectral intensity areal ratio A (D/G) were added in place of acetylene black. It should be noted that the intensity areal ratio A (D/G) is defined as being the background-free Raman spectral intensity ratio of the G peak appearing at the number of waves of 1570 to 1590 cm⁻¹ and the D peak appearing at the number of waves of 1350 to 1360 cm⁻¹ as measured in the Raman spectrometry. Meanwhile, the Raman spectral intensity areal ratio A (D/G) used in Example 3 was 1.65.

### 32.

### Conditions for Measurement

apparatus: JRS-SYS1000(D) manufactured by RENISHAW and NIPPON DENSHI KK
light source: Ar⁺ laser (wavelength of 514.5 nm)
light source output: 2.5 mW
output on a sample: 0.33 mW
laser beam diameter: 21 µm
sample condition: room temperature, in atmospheric air
wavelength for measurement: 1000 cm⁻¹ to 1800 cm⁻¹

### Example 12

A coin-shaped test cell was prepared in the same way as in Example 3, except that, in the preparation of the sample mixture, the carbonaceous material having the intensity areal ratio A (D/G) of 1.56 was added, in place of the acetylene black, so that the carbonaceous material accounts for 7.5 wt% of the entire fired material. Example 13

A coin-shaped test cell was prepared in the same way as in Example 3, except that, in the preparation of the sample mixture, the carbonaceous material having the intensity areal ratio A (D/G) of 1.18 was added, in place of the acetylene black, so that the carbonaceous material accounts for 7.5 wt% of the entire fired material. Example 14

A coin-shaped test cell was prepared in the same way as in Example 3, except that, in the preparation of the sample mixture, the carbonaceous material having the intensity areal ratio A (D/G) of 0.94 was added, in place of the acetylene black, so that the carbonaceous material accounts for 7.5 wt% of the entire fired material. Example 15

A coin-shaped test cell was prepared in the same way as in Example 3, except that, in the preparation of the sample mixture, the carbonaceous material having the intensity areal ratio A (D/G) of 0.51 was added, in place of the acetylene black, so that the carbonaceous material accounts for 7.5 wt% of the entire fired material.

### Example 16

A coin-shaped test cell was prepared in the same way as in Example 3, except that, in the preparation of the sample mixture, the carbonaceous material having the intensity areal ratio A (D/G) of 0.30 was added, in place of the acetylene black, so that the carbonaceous material accounts for 7.5 wt% of the entire fired material.

### Comparative Example 10

A coin-shaped test cell was prepared in the same way as in Example 3, except that, in the preparation of the sample mixture, the carbonaceous material having the intensity areal ratio A (D/G) of 0.26 was added, in place of the acetylene black, so that the carbonaceous material accounts for 7.5 wt% of the entire fired material.

### Comparative Example 11

A coin-shaped test cell was prepared in the same way as in Example 3, except that, in the preparation of the sample mixture, the carbonaceous material having the intensity areal ratio A (D/G) of 0.21 was added, in place of the acetylene black, so that the carbonaceous material accounts for 7.5 wt% of the entire fired material.

On the coin-shaped test cells of the Example 3, Examples 12 to 16 and Comparative Examples 10, 11, prepared as described above, the above-described charging/discharging test was conducted to evaluate the initial discharging capacity density. The results are shown in Table 3, in which the cells with the initial discharging capacity density of 100 mAh/g or higher and those with the discharging capacity density less than 100 mAh/g are denoted as ○ and x, respectively. It should be noted that 100 mAh/g denotes the initial discharging capacity density desirable as cell characteristics.

**Table 3**

| | A (D/G) | initial discharging capacity (mAh/g) | cell evaluation |
|---|---|---|---|
| Ex.3 | 1.65 | 160 | ○ |
| Ex.12 | 1.56 | 160 | ○ |
| Ex.13 | 1.18 | 160 | ○ |
| Ex.14 | 0.94 | 158 | ○ |
| Ex.15 | 0.51 | 135 | ○ |
| Ex.16 | 0.3 | 106 | ○ |
| Comp. Ex.10 | 0.26 | 67 | × |
| Comp. Ex.11 | 0.21 | 21 | × |

It may be seen from Table 3 that, with the Example 3 and the Examples 12 to 16, the initial discharging capacity density is not less than 100, testifying to desirable properties as the cell. Conversely, the Comparative Examples 10 and 11 are practically not suited as cells due to the lower values of the initial discharging capacity density. From these, it may be said that, by adding the carbonaceous material-having the Raman spectral intensity areal ratio A (D/G) of not less than 0.3 in preparing the sample mixture in the preparation of the LiFePO₄ composite carbon material, a cathode active material and a cell may be prepared having the initial discharging capacity density desirable as cell characteristics.

Next, evaluation was made of cell characteristics in case the firing temperature in preparing the LiFePO₄ composite carbon material was changed.

### Comparative Example 12

A coin-shaped test cell was prepared in the same way as in Example 3 except setting the firing temperature in the preparation of the LiFePO₄ composite carbon material to 300°C.

### Example 17

A coin-shaped test cell was prepared in the same way as in Example 3 except setting the firing temperature in the preparation of the LiFePO₄ composite carbon material to 400°C.

### Example 18

A coin-shaped test cell was prepared in the same way as in Example 3 except setting the firing temperature in the preparation of the LiFePO₄ composite carbon material to 500°C.

### Exampl e 19

A coin-shaped test cell was prepared in the same way as in Example 3 except setting the firing temperature in the preparation of the LiFePO₄ composite carbon material to 700°C.

### Example 20

A coin-shaped test cell was prepared in the same way as in Example 3 except setting the firing temperature in the preparation of the LiFePO₄ composite carbon material to 800°C.

### Example 21

A coin-shaped test cell was prepared in the same way as in Example 3 except setting the firing temperature in the preparation of the LiFePO₄ composite carbon material to 900°C.

### Comparative Example 13

A coin-shaped test cell was prepared in the same way as in Example 3 except setting the firing temperature in the preparation of the LiFePO₄ composite carbon material to 1000°C.

On the coin-shaped test cells of the Example 3, Examples 17 to 21, and Comparative Examples 12 and 13, prepared as described above, the above-mentioned charging/discharging tests were conducted to evaluate the initial discharging capacity density. The results are shown in Table 4. As for the cell evaluation in this Table 4, the cell having the initial volumetric capacity not lower than 100 mAh/cm³ was marked ○, while that with the initial volumetric capacity lower than 100 mAh/cm³ was marked x. It should be noted that 350 mAh/cm³ represents the measure of the initial volumetric capacity density desirable as cell characteristics.

**Table 4**

| | firing temperature | initial discharging capacity (mAh/g) | cell evaluation |
|---|---|---|---|
| Ex.3 | 600°C | 160 | ○ |
| Comp. Ex.12 | 300°C | 91 | × |
| Comp. Ex. 17 | 400°C | 129 | ○ |
| Ex.18 | 500°C | 155 | ○ |
| Ex.19 | 700°C | 159 | ○ |
| Ex.20 | 800°C | 150 | ○ |
| Ex.21 | 900°C | 124 | ○ |
| Comp. Ex.13 | 1000°C | 88 | × |

From Table 4, it is seen that the cells of the Examples 3 and 17 to 21 are of the initial discharging capacity density of 100, thus exhibiting characteristics desirable as the cells. Conversely, the cells of the Comparative Examples 12 and 13 are low in the initial discharging capacity density and are practically not proper as cells. From these, it may be said that the cathode active material and the cell having the values of the initial discharging capacity density desirable as the cell may be prepared by setting the firing temperature in preparing the LiFePO₄ composite carbon material to 400°C to 900°C.

### Example 22

As for the gel electrolyte, polyvinylidene fluoride, having hexafluoropropylene co-polymerized in a proportion of 6.9 wt%, a non-aqueous electrolytic solution and dimethyl carbonate, were mixed together, agitated and dissolved to prepare a sol-like electrolytic solution. The non-aqueous electrolytic solution was prepared by dissolving LiPF₆ in a mixed solvent of ethylene carbonate (EC) and propylene carbonate (PC) in a volumetric ratio of 6:4 at a ratio of 0.85 mol/kg. To the resulting solution was added 0.5 wt% of vinylene carbonate (VC) to form a gel electrolyte.

For preparing a cathode, 95 parts by weight of the LiFePO₄ composite carbon material, prepared in Example 3, and 5 parts by weight of poly(vinylidene fluoride) which is fluorine resin powders as a binder, were mixed together, and admixed with N-methyl pyrrolidone to form a slurry. This slurry was coated on an aluminum foil 20µm thickness, dried under heating and pressed to form a cathode coated film. A gel electrolyte solution then was coated on one surface of the cathode coated film and dried to remove the solvent. The resulting product was punched to a circular shape with a diameter of 15 mm depending on the cell diameter to from a cathode.

For preparing an anode, 10 wt% of fluorine resin powders, as a binder, were mixed to the graphite powders, and admixed with N-methyl pyrrolidone to form a slurry, which was then coated on a copper foil and dried under heating. The resulting product was pressed and punched to the size of a cell to a circular shape with a diameter of 16.5 mm to form an anode.

In a solvent mixture of equal volumes of propylene carbonate and dimethyl carbonate was dissolved LiPF₆ in a concentration of 1 mol/l to prepare a non-aqueous electrolytic solution.

The cathode, so produced, was housed in the cathodic can, while the anode was housed in the anodic can and a separator was arranged between the cathode and the anode. The non-aqueous electrolytic solution was charged into the cathodic can and into the anodic can which were then caulked and secured together to prepare a 2016 type coin-shaped test cell 20.0 mm in diameter and 1.6 mm in thickness.

The lithium polymer cell of the Example 22, prepared as described above, was put to a charging/discharging test to check the cyclic performance to find the discharging capacity density and the discharge capacity upkeep ratio (%). The charging/discharging was repeated 30 cycles to find the discharge capacity upkeep ratio after 30 cycles. The results are shown in Table 5.

**Table 5**

| | initial discharging capacity (mAh/g) | volumetric upkeep ratio (%) |
|---|---|---|
| Ex.22 | 158 m | 95.8 |

As may be seen from Table 5, both the initial discharging capacity density and the volumetric upkeep ratio after 30 cycles exhibit satisfactory values. From these, it may be seen that the cathode active material of the present invention exhibits meritorious effects, such as improved discharging capacity and cyclic characteristics, even in case a gel electrolyte is used as the non-aqueous solvent in place of the non-aqueous electrolytic solution.

In sum, a cathode active material according to the present invention is composed of a compound having the general formula LiₓFePO₄ where 0 < x ≤ 1.0, and a carbon material, with the carbon content per unit weight being not less than 3 wt% and with the powder density being not lower than 2.2 g/cm³.

Thus, the cathode active material according to the present invention exhibits superior electron conductivity. Moreover, since the carbon content per unit weight is set so as to be not less than 3 wt%, with the powder density being not lower than 2.2 g/cm³, the cathode active material exhibits superior electron conductivity and packing ratio.

A non-aqueous electrolyte cell according to the present invention has a cathode including a cathode active material, an anode including an anode active material and a non-aqueous electrolyte, with the cathode active material being composed of a compound having the general formula LiₓFePO₄ where 0 < x ≤ 1.0, and a carbon material, with the carbon content per unit weight being not less than 3 wt% and with the powder density being not lower than 2.2 g/cm³.

That is, the non-aqueous electrolyte cell, according to the present invention, made up of LiₓFePO₄ where 0 < x ≤ 1.0, and a carbon material, with the carbon content per unit weight being not less than 3 wt%, is superior in cell capacity and in cyclic characteristics.

A method for the preparation of a cathode active material composed of a compound having the general formula LiₓFePO₄ where 0 < x ≤ 1.0, and a carbon material, with the carbon content per unit weight being not less than 3 wt% and with the powder density being not lower than 2.2 g/cm³, according to the present invention, includes mixing a plurality of starting materials for synthesis for a compound represented by the general formula LiₓFePO₄, milling and sintering the resulting mixture and adding a carbon material at any time point in the course of the mixing, milling and sintering.

In the method for the preparation of the cathode active material, according to the present invention, in which the carbon material is added, and milling is used, a cathode active material may be produced which is superior in electron conductivity and in which the powder density is 2.2 g/cm³ or higher.

A method for the preparation of a non-aqueous electrolyte cell including a cathode containing a cathode active material composed of a compound having the general formula LiₓFePO₄ where 0 < x ≤ 1.0, and a carbon material, with the carbon content per unit weight being not less than 3 wt% and with the powder density being not lower than 2.2 g/cm³, an anode containing an anode active material, and a non-aqueous electrolyte, according to the present invention, includes mixing a plurality of starting materials for synthesis for a compound represented by the general formula LiₓFePO₄, milling and sintering the resulting mixture, and adding a carbon material at any time point in the course of the mixing, milling and sintering.

In the method for the preparation of the cathode active material, according to the present invention, in which the carbon material is added in preparing the cathode active material, and milling is applied, a cathode active material having superior electron conductivity and high packing ratio and hence a non-aqueous electrolyte cell having a high cell capacity and superior cyclic characteristics may be produced.

## Claims

1. A cathode active material composed of a compound having a general formula LiₓFePO₄ where 0 < x ≤ 1.0, and a carbon material, with a carbon content per unit weight being not less than 3 wt% and with a powder density being not lower than 2.2 g/cm³, wherein the carbon material satisfies a condition that, with an intensity area appearing in a number of waves of 1350 to 1360 cm⁻¹ and an intensity area appearing in the number of waves of 1570 to 1590 cm⁻¹ in the Raman spectrometry being D and G, respectively, an intensity areal ratio of D and G (A (D/G)) is such that A (D/G) ≤ 0.30.

2. A non-aqueous electrolyte cell having a cathode including a cathode active material, an anode including an anode active material, and a non-aqueous electrolyte, said cathode active material being composed of a compound having a general formula LiₓFePO₄, where 0 < x ≤ 1.0, and a carbon material, with a carbon content per unit weight being not less than 3 wt% and with a powder density being not lower than 2.2 g/cm³, wherein the carbon material satisfies a condition that, with an intensity area appearing in a number of waves of 1350 to 1360 cm⁻¹ and an intensity area appearing in the number of waves of 1570 to 1590 cm⁻¹ in the Raman spectrometry being D and G, respectively, an intensity areal ratio of D and G (A (D/G)) is such that A (D/G) ≥ 0.30.

3. The non-aqueous electrolyte cell according to claim 2 wherein said non-aqueous electrolyte is a solution-based non-aqueous electrolyte.

4. The non-aqueous electrolyte cell according to claim 2 wherein said non-aqueous electrolyte is a polymer-based non-aqueous electrolyte.

5. A method for the preparation of a cathode active material composed of a compound having a general formula LiₓFePO₄ where 0 < x ≤ 1.0, and a carbon material, with a carbon content per unit weight being not less than 3 wt% and with a powder density being not lower than 2.2 g/cm³ wherein such carbon material is used which satisfies a condition that, with an intensity area appearing in a number of waves of 1350 to 1360 cm⁻¹ and an intensity area appearing in the number of waves of 1570 to 1590 cm⁻¹ in the Raman spectrometry being D and G, respectively, an intensity areal ratio of D and G (A (D/G)) is such that A (D/G) ≥ 0.30, comprising:
mixing a plurality of starting materials for synthesis for a compound represented by the general formula LiₓFePO₄, milling and sintering the resulting mixture and adding a carbon material at any time point in the course of the mixing, milling and sintering.

6. The method for the preparation of the cathode active material according to claim 5 wherein said carbon material is added before milling.

7. The method for a preparation of the cathode active material according to claim 5 wherein said carbon material is added after sintering and wherein said milling is carried out after addition of the carbon material.

8. The method for the preparation of the cathode active material according to claim 5 wherein said sintering is carried out in a temperature range of 400°C to 900°C.

9. A method for a preparation of a non-aqueous electrolyte cell including a cathode containing a cathode active material composed of a compound having a general formula LiₓFePO₄ where 0 < x ≤ 1.0. and a carbon material, with a carbon content per unit weight being not less than 3 wt% and with a powder density being not lower than 2.2 g/cm³ wherein such carbon material is used which satisfies a condition that, with an intensity area appearing in a number of waves of 1350 to 1360 cm⁻¹ and an intensity area appearing in the number of waves of 1570 to 1590 cm⁻¹ in the Raman spectrometry being D and G, respectively, an intensity areal ratio of D and G (A (D/G)) is such that A (D/G) ≥ 0.30, an anode containing an anode active material, and a non-aqueous electrolyte, said method including mixing a plurality of starting materials for synthesis for a compound represented by the general formula LiₓFePO₄, milling and sintering the resulting mixture and adding a carbon material at any time point in the course of the mixing, milling and sintering.

10. The method for the preparation of a non-aqueous electrolyte cell according to claim 9 wherein said carbon material is added before milling.

11. The method for the preparation of the non-aqueous electrolyte cell according to claim 9 wherein said carbon material is added after sintering and wherein said milling is carried out after addition of the carbon material.

12. The method for the preparation of the non-aqueous electrolyte cell according to claim 9 wherein said sintering is carried out in a temperature range of 400°C to 900°C.

13. The method for the preparation of the non-aqueous electrolyte cell according to claim 9 wherein said non-aqueous electrolyte is a solution-based non-aqueous electrolyte.

14. The method for the preparation of the non-aqueous electrolyte cell according to claim 9 wherein said non-aqueous electrolyte is a polymer-based non-aqueous electrolyte.

## Patentansprüche

1. Aktives Material für Kathode, umfassend eine Verbindung mit der allgemeinen Formel LiₓFePO₄, wobei 0 < x s 1,0 ist, und ein Kohlenstoffmaterial, wobei der Kohlenstoffgehalt pro Gewichtseinheit nicht weniger als 3 Gew.-% beträgt und wobei die Schüttdichte nicht geringer als 2,2 g/cm³ ist, wobei das Kohlenstoffmaterial eine Bedingung erfüllt, dass wenn eine Intensitätsfläche, die bei den Wellenzahlen 1350 bis 1360 cm⁻¹ auftritt, und eine Intensitätsfläche, die bei den Wellenzahlen von 1570 bis 1590 cm⁻¹ in der Raman-Spektroskopie auftritt, D bzw. G sind, ein Intensitätsflächenverhältnis von D und G (A(D/G)) so ist, dass A(D/G) ≥ 0,30 ist.

2. Nichtwässrige Elektrolytzelle mit einer Kathode, umfassend ein aktives Material für Kathode, einer Anode mit einem anodenaktiven Material und einem nicht wässrigen Elektrolyten, wobei das aktive Material für die Kathode eine Verbindung umfasst mit der allgemeinen Formel LiₓFePO₄, wobei 0 < x ≤ 1,0 ist, und ein Kohlenstoffmaterial, wobei der Kohlenstoffgehalt pro Gewichtseinheit nicht weniger als 3 Gew.-% beträgt und wobei die Schüttdichte nicht geringer als 2,2 g/cm³ ist, wobei das Kohlenstoffmaterial eine Bedingung erfüllt, dass wenn eine Intensitätsfläche die bei den Wellenzahlen 1350 bis 1360 cm⁻¹ auftritt, und eine Intensitätsfläche, die bei den Wellenzahlen von 1570 bis 1590 cm⁻¹ in der Raman-Spektroskopie auftritt, D bzw. G sind, ein Intensitätsflächenverhältnis von D und G (A(D/G)) so ist, dass A(D/G) ≥ 0,30 ist.

3. Nichtwässrige Elektrolytzelle nach Anspruch 2, wobei der nichtwässrige Elektrolyt ein auf einer Lösung basierender nichtwässriger Elektrolyt ist.

4. Nichtwässrige Elektrolytzelle nach Anspruch 2, wobei der nichtwässrige Elektrolyt ein auf einem Polymer basierender nichtwässriger Elektrolyt ist.

5. Verfahren zur Herstellung eines aktiven Materials für eine Kathode, umfassend eine Verbindung mit der allgemeinen Formel LiₓFePO₄, wobei 0 < x ≤ 1,0 ist, und ein Kohlenstoffmaterial, wobei der Kohlenstoffgehalt pro Gewichtseinheit nicht weniger als 3 Gew.-% beträgt und wobei die Schüttdichte nicht geringer als 2,2 g/cm³ ist, wobei so ein Kohlenstoffmaterial verwendet wird, das eine Bedingung erfüllt, dass wenn eine Intensitätsfläche die bei den Wellenzahlen 1350 bis 1360 cm⁻¹ auftritt, und eine Intensitätsfläche, die bei Wellenzahlen von 1570 bis 1590 cm⁻¹ in der Raman-Spektroskopie auftritt, D bzw. G sind, ein Intensitätsflächenverhältnis von D und G (A(D/G)) so ist, dass A(D/G) ≥ 0,30 ist, umfassend
Mischen einer Vielzahl von Ausgangsmaterialien zur Synthese einer Verbindung, die durch die allgemeine Formel LiₓFePO₄ dargestellt ist, Mahlen und Sintern des resultierenden Gemisches und Zugeben eines Kohlenstoffmaterials zu irgendeinem Zeitpunkt im Verlauf des Mischens, Mahlens und Sinterns.

6. Verfahren zur Herstellung des aktiven Kathodenmaterials nach Anspruch 5, wobei das Kohlenstoffmaterial vor dem Mahlen zugegeben wird.

7. Verfahren zur Herstellung des aktiven Kathodenmaterials nach Anspruch 5, wobei das Kohlenstoffmaterial nach dem Sintern zugegeben wird und wobei das Mahlen nach der Zugabe des Kohlenstoffmaterials durchgeführt wird.

8. Verfahren zur Herstellung des aktiven Kathodenmaterials nach Anspruch 5, wobei das Sintern in einem Temperaturbereich von 400°C bis 900°C durchgeführt wird.

9. Verfahren zur Herstellung einer nichtwässrigen Elektrolytzelle, die eine Kathode aufweist, die ein aktives Kathodenmaterial enthält, umfassend eine Verbindung mit der allgemeinen Formel LiₓFePO₄, wobei 0 < x ≤ 1,0 ist, und ein Kohlenstoffmaterial, wobei der Kohlenstoffgehalt pro Gewichtseinheit nicht weniger als 3 Gew.-% beträgt und wobei die Schüttdichte nicht geringer als 2,2 g/cm³ ist, wobei so ein Kohlenstoffmaterial verwendet wird, das eine Bedingung erfüllt, dass wenn eine Intensitätsfläche, die bei den Wellenzahlen 1350 bis 1360 cm⁻¹ auftritt, und eine Intensitätsfläche, die bei Wellenzahlen von 1570 bis 1590 cm⁻¹ in der Raman-Spektroskopie auftritt, D bzw. G sind, ein Intensitätsflächenverhältnis von D und G (A(D/G)) so ist, dass A(D/G) ≥ 0,30 ist, eine Anode mit einem aktiven Anodenmaterial und einen nichtwässrigen Elektrolyt, wobei das Verfahren umfasst das Mischen einer Vielzahl von Ausgangsmaterialien zur Synthese einer Verbindung, die durch die allgemeine Formel LiₓFePO₄ dargestellt ist, Mahlen und Sintern der resultierenden Mischung und Zugeben eines Kohlenstoffmaterials zu irgendeinem Zeitpunkt im Verlauf von Mischen, Mahlen und Sintern.

10. Verfahren zur Herstellung einer nichtwässrigen Elektrolytzelle nach Anspruch 9, wobei das Kohlenstoffmaterial vor dem Mahlen zugegeben wird.

11. Verfahren zur Herstellung der nichtwässrigen Elektrolytzelle nach Anspruch 9, wobei das Kohlenstoffmaterial nach dem Sintern zugegeben wird und wobei das Mahlen nach der Zugabe des Kohlenstoffmaterials durchgeführt wird.

12. Verfahren zur Herstellung der nichtwässrigen Elektrolytzelle nach Anspruch 9, wobei das Sintern in einem Temperaturbereich von 400°C bis 900°C durchgeführt wird.

13. Verfahren zur Herstellung der nichtwässrigen Elektrolytzelle nach Anspruch 9, wobei der nichtwässrige Elektrolyt ein auf einer Lösung basierender nichtwässriger Elektrolyt ist.

14. Verfahren zur Herstellung der nichtwässrigen Elektrolytzelle nach Anspruch 9, wobei der nichtwässrige Elektrolyt ein auf einem Polymer basierender nichtwässriger Elektrolyt ist.

## Revendications

1. Matériau actif de cathode se composant d'un composé ayant une formule générale LiₓFePO₄ où 0 < x ≤ 1,0, et une matériau de carbone, ayant une teneur en carbone par poids unitaire qui n'est pas inférieure à 3 % en poids et ayant une densité de poudre qui n'est pas inférieure à 2,2 g/cm³, dans lequel le matériau de carbone satisfait une condition que, avec une zone d'intensité apparaissant dans un nombre d'ondes de 1350 à 1360 cm⁻¹ et une zone d'intensité apparaissant dans le nombre d'ondes de 1570 à 1590 cm⁻¹ dans la spectrométrie Raman qui sont D et G respectivement, un rapport de surface d'intensité de D et G (A (D/G)) est tel que A(D/G) ≥ 0,30.

2. Pile à électrolyte non aqueux ayant une cathode incluant un matériau actif de cathode, une anode incluant un matériau actif d'anode, et un électrolyte non aqueux, ledit matériau actif de cathode se composant d'un composé ayant une formule générale LiₓFePO₄ où 0 < x ≤ 1,0, et d'un matériau de carbone, ayant une teneur en carbone par poids unitaire qui n'est pas inférieure à 3 % en poids et ayant une densité de poudre qui n'est pas inférieure à 2,2 g/cm³, dans laquelle le matériau de carbone satisfait une condition que, avec une zone d'intensité apparaissant dans un nombre d'ondes de 1350 à 1360 cm⁻¹ et une zone d'intensité apparaissant dans le nombre d'ondes de 1570 à 1590 cm⁻¹ dans la spectrométrie Raman qui sont D et G respectivement, un rapport de surface d'intensité de D et G (A (D/G)) est tel que A(D/G) ≥ 0,30.

3. Pile à électrolyte non aqueux selon la revendication 2, dans laquelle ledit électrolyte non aqueux est un électrolyte non aqueux en solution.

4. Pile à électrolyte non aqueux selon la revendication 2, dans laquelle ledit électrolyte non aqueux est un électrolyte non aqueux polymère.

5. Procédé de préparation d'un matériau actif de cathode se composant d'un composé ayant une formule générale LiₓFePO₄ où 0 < x ≤ 1,0, et d'un matériau de carbone, ayant une teneur en carbone par poids unitaire qui n'est pas inférieure à 3 % en poids et ayant une densité de poudre qui n'est pas inférieure à 2,2 g/cm³, dans lequel le matériau de carbone satisfait une condition que, avec une zone d'intensité apparaissant dans un nombre d'ondes de 1350 à 1360 cm⁻¹ et une zone d'intensité apparaissant dans le nombre d'ondes de 1570 à 1590 cm⁻¹ dans la spectrométrie Raman qui sont D et G respectivement, un rapport de surface d'intensité de D et G (A (D/G)) est tel que A(D/G) ≥ 0,30, comprenant :
le mélange d'une pluralité de matériaux de départ pour la synthèse d'un composé représenté par la formule générale LiₓFePO₄, le broyage et le frittage du mélange résultant et l'ajout d'un matériau de carbone à n'importe quel moment pendant le mélange, le broyage et le frittage.

6. Procédé de préparation du matériau actif de cathode selon la revendication 5, dans lequel ledit matériau de carbone est ajouté avant le broyage.

7. Procédé de préparation du matériau actif de cathode selon la revendication 5, dans lequel ledit matériau de carbone est ajouté après le frittage et dans lequel ledit broyage est réalisé après l'ajout du matériau de carbone.

8. Procédé de préparation du matériau actif de cathode selon la revendication 5, dans lequel ledit frittage est réalisé dans une plage de température de 400 °C à 900 °C.

9. Procédé de préparation d'une pile à électrolyte non aqueux incluant une cathode comprenant un matériau actif de cathode se composant d'un composé ayant une formule générale LiₓFePO₄ où 0 < x ≤ 1,0, et un matériau de carbone, ayant une teneur en carbone par poids unitaire qui n'est pas inférieure à 3 % en poids et ayant une densité de poudre qui n'est pas inférieure à 2,2 g/cm³, dans lequel le matériau de carbone satisfait une condition que, avec une zone d'intensité apparaissant dans un nombre d'ondes de 1350 à 1360 cm⁻¹ et une zone d'intensité apparaissant dans le nombre d'ondes de 1570 à 1590 cm⁻¹ dans la spectrométrie Raman qui sont D et G respectivement, un rapport de surface d'intensité de D et G (A (D/G)) est tel que A(D/G) ≥ 0,30, une anode contenant un matériau actif d'anode, et un électrolyte non aqueux, ledit procédé incluant le mélange d'une pluralité de matériaux de départ pour la synthèse d'un composé représenté par la formule générale LiₓFePO₄, le broyage et le frittage du mélange résultant et l'ajout d'un matériau de carbone à n'importe quel moment pendant le mélange, le broyage et le frittage.

10. Procédé de préparation d'une pile à électrolyte non aqueux selon la revendication 9, dans lequel ledit matériau de carbone est ajouté avant le broyage.

11. Procédé de préparation d'une pile à électrolyte non aqueux selon la revendication 9, dans lequel ledit matériau de carbone est ajouté après le frittage et dans lequel ledit broyage est réalisé après l'ajout du matériau de carbone.

12. Procédé de préparation d'une pile à électrolyte non aqueux selon la revendication 9, dans lequel ledit frittage est réalisé dans une plage de température de 400 °C à 900 °C.

13. Procédé de préparation d'une pile à électrolyte non aqueux selon la revendication 9, dans lequel ledit électrolyte est un électrolyte non aqueux en solution.

14. Procédé de préparation d'une pile à électrolyte non aqueux selon la revendication 9, dans lequel ledit électrolyte non aqueux est un électrolyte non aqueux polymère.
